Europäisches Patentamt

**European Patent Office**

Office européen des brevets

(11) Numéro de publication: **0 207 843
B1**

(12) **FASCICULE DE BREVET EUROPEEN**

(45) Date de publication du fascicule du brevet:
**11.10.89**

(51) Int. Cl.⁴: **F16M 11/42, D06F 39/12**

(21) Numéro de dépôt: **86401315.6**

(22) Date de dépôt: **17.06.86**

(54) **Socle à roulettes escamotables, et appareil muni d'un tel socle.**

(30) Priorité: **21.06.85 FR 8509498**

(43) Date de publication de la demande:
**07.01.87 Bulletin 87/2**

(45) Mention de la délivrance du brevet:
**11.10.89 Bulletin 89/41**

(84) Etats contractants désignés:
**DE FR GB IT**

(56) Documents cités:
**FR-A- 2 235 849
FR-A- 2 235 850
GB-A- 1 136 591
GB-A- 1 286 268**

(73) Titulaire: **ESSWEIN S.A., Route de Cholet, F-85002 La Roche-sur-Yon(FR)**

(72) Inventeur: **Briand, Loic, THOMSON-CSF SCPI 19, avenue de Messine, F-75008 Paris(FR)**

(74) Mandataire: **Grynwald, Albert et al, THOMSON-CSF SCPI, F-92045 PARIS LA DEFENSE CEDEX 67(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un socle à roulettes escamotables et un appareil muni d'un tel socle.

Un appareil lourd et soumis à des déplacements plus ou moins fréquents est généralement muni de roulettes qui le rendent mobile et facilement déplaçable. Pour que l'appareil reste fixe dans un emplacement choisi, les roulettes sont rendues escamotables pour permettre à l'appareil de se poser sur des pieds fixes.

Dans les appareils connus tels que les lave-linge connus, ces roulettes escamotables font partie des systèmes à chariot ou à dispositif télescopique, fixés par vis ou boulons à la partie inférieure du bâti ou socle de ces appareils, et sont dans les systèmes à chariot soit portées par des biellettes articulables soit montées individuellement ou par paire sur des axes coulissants dans des trous allongés inclinés.

Un des systèmes connus à roulettes escamotables est décrit dans le document FR-A 2 235 850. Ce système comprend un chariot à roulettes et un levier de manœuvre associé pivotant muni d'un têton d'entraînement. Le chariot à roulettes comprend, d'une part, deux paires de roulettes portées par des axes rectilignes distincts, et d'autre part, deux supports en éléments formées sous presse et soudés en T dont le premier, fixé par vis au socle d'un appareil, est muni dans le voisinage des extrémités de ses rebords latéraux parallèles, de quatre orifices allongés inclinés servant de rampes de coulissement pour les axes des roulettes, et dans le voisinage de sa partie frontale, d'un orifice de fixation de l'axe du levier pivotant de manœuvre et d'un orifice semi-circulaire destiné au passage du têton de ce levier de manœuvre, et le deuxième monté coulissant coaxialement dans le premier est pourvu dans le voisinage des extrémités de ses rebords latéraux parallèles, de quatre trous de montage des axes des roulettes, et dans le voisinage de sa partie frontale, d'un orifice ou boutonnière destiné à recevoir le têton du levier de manœuvre de manière que lors d'un pivotement de ce levier de manœuvre ce têton entraîne le deuxième support en T à coulisser dans le premier support en T et par conséquent à coulisser les axes des roulettes dans les orifices allongés inclinés de ce premier support en T, et ainsi à sortir ou escamoter ces roulettes par rapport au socle de l'appareil.

Ces systèmes à roulettes escamotables comportent ainsi en général un nombre de pièces relativement grand dont la fabrication et le montage avec des moyens de fixation connus à vis, clips ou agrafes sont relativement longs et onéreux.

La présente invention ayant pour but d'éviter ces inconvénients permet de réaliser un socle ou bâti d'appareil, à roulettes escamotables, et un appareil industriel ou domestique tel qu'un lave-linge muni comme bâti ou pièce principale de bâti, un tel socle.

Selon l'invention, un socle à roulettes escamotables comprenant dans sa face inférieure un jeu de roulettes mobiles longitudinalement déplaçable, et un levier accomplissant des fonctions d'entraînement, de blocage et de butées de ce jeu de roulettes, est caractérisé en ce qu'il comprend dans sa face inférieure, d'une part, un jeu de roulettes mobiles monté sur un axe commun et un levier à cames, et d'autre part, des alvéoles et des ailettes de retenue formant entre eux des logements et voies de déplacement pour les roulettes, et des guides de coulissement, de mise en place et de dégagement pour l'axe commun qui contribuent à permettre un assemblage de l'ensemble "jeu de roulettes, axe commun, levier à cames et socle, par montage par insertion, et par maintien de cet ensemble dans leur cohésion mécanique de fonctionnement par interconnexion mécanique des éléments constituants.

Pour mieux faire comprendre l'invention, on en décrit ci-après un exemple de réalisation illustré par des dessins ci-annexés dont

- la figure 1 représente une vue schématique en perspective d'un appareil sous forme d'un lave-linge muni d'un socle à roulettes escamotables réalisé selon l'invention ;
- la figure 2 représente à une autre échelle une vue partielle et schématique de dessous du socle à roulettes escamotables du lave-linge de la figure 1, montrant les roulettes en position de sortie et leur levier de commande ou levier à cames ;
- la figure 3 représente une vue partielle et schématique du socle à roulettes escamotables de la figure 2, montrant les roulettes en position escamotée, et leur levier à cames de commande ;
- la figure 4 représente une vue partielle et schématique du socle à roulettes escamotables de la figure 2, montrant le levier à cames de commande des roulettes dans une position permettant son démontage ou montage ;
- la figure 5 représente une vue partielle et schématique du levier à cames de commande des roulettes du socle de la figure 2, montrant la face du levier adjacente au socle ;
- la figure 6 représente une vue latérale partielle du levier à cames de commande des roulettes de la figure 2, et
- la figure 7 représente une vue partielle du socle de la figure 2, en coupe suivant un plan VI-VI, montrant schématiquement les roulettes et leur axe commun respectivement dans leur position escamotée, dans leur position de sortie, et dans trois de leurs positions, lors de leur démontage ou mis en place.

L'invention est applicable aux appareils industriels ou domestiques.

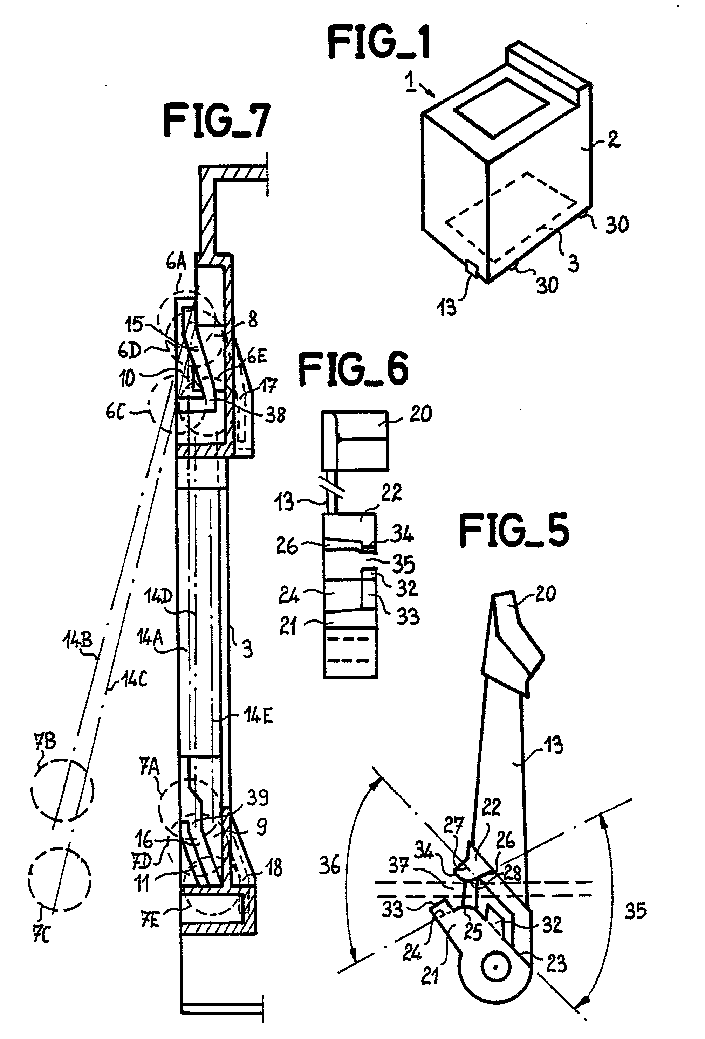

Un appareil tel qu'un lave-linge 1 réalisé selon l'invention est schématiquement illustré dans la figure 1 comprend une carrosserie 2, et un bâti ou un socle 3 à roulettes escamotables sur lequel sont montés les organes habituels et connus de fonctionnement non représentés.

Selon une caractéristique importante, le socle 3 à roulettes escamotables comprend dans sa face inférieure un jeu de roulettes 6, 7 mobiles, à axe commun 14 et longitudinalement déplaçable, et un levier à cames 13 accomplissant au moins quatre fonctions, cette d'un maintien mutuel en place dans ce socle entre ce jeu de roulettes, et ce levier, celle d'entraînement, celle de blocage de ce jeu de roulettes, et celle de butées pour ce dernier.

Selon une autre caractéristique, le socle 3 à roulettes escamotables comprend dans sa face inférieure des alvéoles 4 et 5 et des ailettes de retenue 10, 11 formant entre eux des logements et voies de déplacement pour les roulettes 6, 7 et des guides de coulissement, de mise en place et de dégagement pour le jeu de roulettes 6, 7 qui contribuent à réaliser un assemblage de l'ensemble "jeu de roulettes 6, 7, levier à cames 13 et socle 3" par montage par insertion et par maintien de cet ensemble dans leur cohésion mécanique de fonctionnement par interconnexion mécanique des éléments constituants excluant tout système mécanique d'assemblage par vis, goupilles, clips ou agrafes.

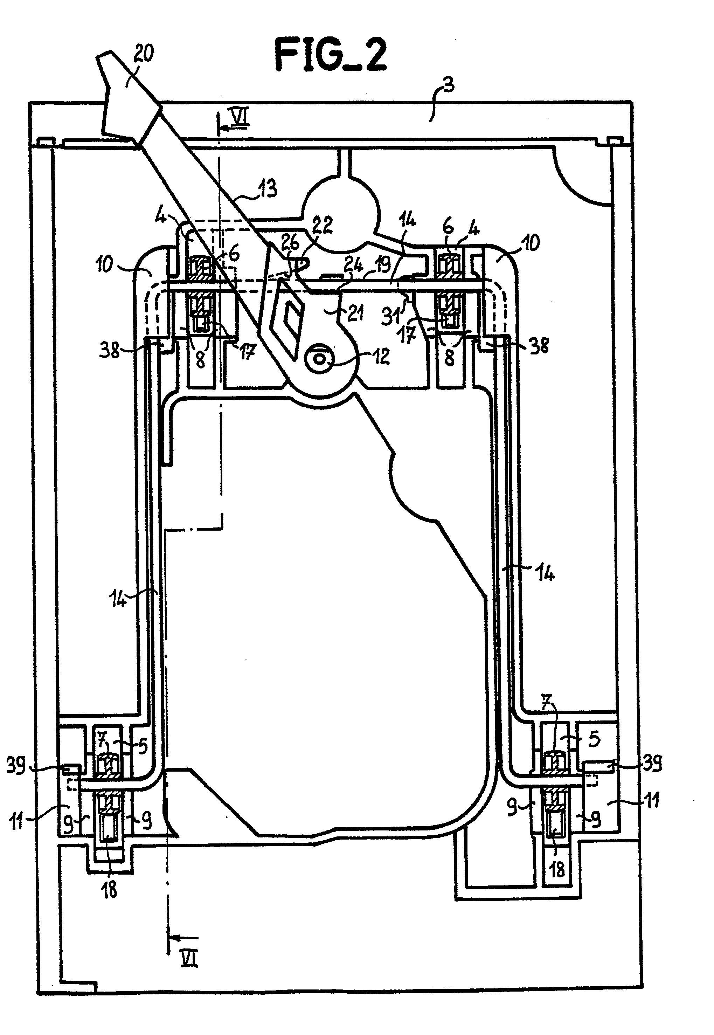

Dans l'exemple illustré, le socle 3 comprend dans sa face inférieure, deux alvéoles frontales allongées parallèles 4 et deux alvéoles arrière allongées parallèles 5 pour recevoir respectivement deux roulettes frontales 6 et deux roulettes arrière 7. Ces alvéoles parallèles 4 et 5 ont chacun deux bords longitudinaux rectilignes et parallèles pourvus d'arêtes en partie inclinée 8 et 9 qui servent de rampes de glissement et de changement de niveaux pour l'axe commun 14 des roulettes 6 et 7 lors de leur mise en position de sortie ou d'escamotage. Ces alvéoles 4 et 5 ont au moins dans leurs parties arrière une profondeur égale ou supérieure au diamètre des roulettes 6, 7 pour qu'en position d'escamotage ces roulettes 6 et 7 soient complètement en retrait de la surface inférieure du socle 3. Des ailettes de retenue 10 et 11 coopèrent respectivement avec les arêtes des bords longitudinaux rectilignes et parallèles de ces alvéoles 4 et 5 pour former des guides 15 et 16 à une une (figures 2 et 6) ou deux (non représentés) extrémités ouvertes, pour le coulissement de l'axe commun 14 des roulettes 6, 7 le long des rampes constituées par les arêtes en partie inclinée des bords des alvéoles 4 et 5. Les roulettes frontales 6 et arrière 7 sont portées et maintenues dans leur écartement avant-arrière par un axe commun filiforme rigide 14 constitué dans l'exemple illustré par une tige métallique rigide ayant une forme générale d'un U à extrémités libres des branches du U repliées vers l'extérieur et parallèlement au fond de ce U. Les roulettes 6 et 7 sont mises en place dans les alvéoles 4 et 5 par insertion de leur axe commun 14 dans les guides de coulissement 15 et 16 à travers les extrémités ouvertes 38, 39 de ces guides, autrement dit dans les espaces délimités par les dessous des ailettes de retenue 10 et 11 et les arêtes des bords longitudinaux des alvéoles 4 et 5. La longueur des alvéoles 4 et 5 est déterminée en fonction de la hauteur du U de l'axe commun 14 des roulettes et de la longueur des ailettes de retenue 10 et 11 de manière que, quand le jeu des roulettes 6, 7 est poussé contre l'une des extrémités des alvéoles 4 et 5 (figure 7) lors d'un dégagement ou d'une mise en place du jeu des roulettes 6, 7, le fond du U de l'axe commun 14 de ces roulettes et/ou les extrémités libres des branches du U de cet axe commun 14 sortent des extrémités ouvertes 38, 39 de ces guides de coulissement 15 ou 16 autrement dit des extrémités libres des ailettes de retenue 10 et/ou 11, ce qui facilite l'enlèvement ou le montage de ce jeu de roulettes 6, 7.

Dans l'exemple illustré aux figures 2 et 7, les guides de coulissement 15 sont fermés à leurs extrémités frontales et ouverts à leurs extrémités arrière en 38 tandis que les guides de coulissement 16 sont fermés à leurs extrémités arrière et ouverts à leurs extrémités frontales en 39. Il en résulte que lors d'un dégagement du jeu des roulettes 6, 7 vis-à-vis du socle 3, les roulettes 6-7 sont poussées contre les extrémités frontales des alvéoles 4 et 5 dans leurs positions A pour que les roulettes arrière 7A et les extrémités de l'axe commun 14A portant ces roulettes 7A puissent être sorties des extrémités frontales ouvertes 39 des guides de coulissement 16 et relevées dans leurs positions 7B et 14B, puis les roulettes 6, 7 et leur axe commun 14 peuvent être ramenés en arrière dans leurs positions 6C, 7C, 14C et dégagés complètement du socle 3. Une mise en place du jeu des roulettes 6, 7 dans le socle 3 se font en sens inverse de celui de son dégagement décrit ci-dessus, pour être d'abord en position C puis en position B et enfin en position A et pour permettre une introduction ou insertion des roulettes 6 et 7 dans leurs alvéoles respectifs 4 et 5 et un coulissement de l'axe commun 14 dans les guides 15 et 16.

Selon une autre caractéristique, le socle 3 comprend (figures 2 et 7) dans les fonds des alvéoles 4 et 5, des languettes élastiques 17, 18 qui exercent une pression contre les roulettes 6 et 7 en position d'escamotage, les immobilisent sur leur axe commun 14 et bloquent cet axe dans les guides de coulissement 15 et 16 de manière à éliminer avantageusement toutes vibrations des roulettes 6 et 7 et/ou de leur axe commun 14 qui, durant le fonctionnement de l'appareil 1, peuvent engendrer des bruits désagréables.

Le levier à cames 13 est amovible et monté dans la partie frontale de l'appareil 1 sur son axe de pivotement 12 qui est solidaire du socle 3.

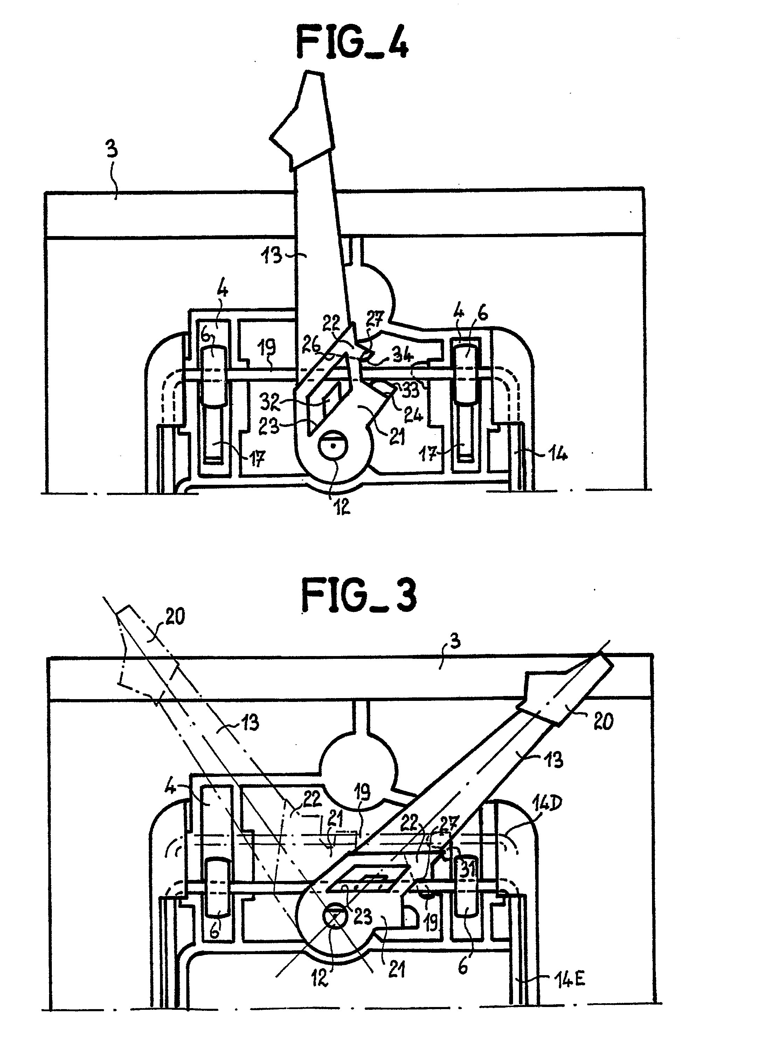

Selon une autre caractéristique, le levier 13 comprend à son extrémité libre une poignée 20 servant également de butée d'arrêt et dans sa partie centrale des cames 21 et 22 qui encadrent un tronçon rectiligne 19 du fond du U de l'axe commun 14 en U des roulettes 6, 7. Ces poignées 20 et cames contribuent à permettre au levier 13 d'accomplir au moins quatre fonctions, une fonction de maintien mutuel entre cet axe commun 14 et le levier 13 amovibles, dans leurs places respectives dans le socle 3, sans recourir aux systèmes mécaniques connus de fixation, de liaison et d'assemblage par vis, goupilles, clips ou agrafes (figures 3 et 4), une fonction d'entraînement des roulettes 6 et 7 de leur position D de sortie (figures 2 et 7) à leur position d'escamotage E (figures 3 et 7) et vice-versa, par déplacement de leur axe commun 14, une fonction de butées donnant des limites au déplacement de cet axe commun 14 pour l'empêcher de sortir des guides de coulissement 15 et 16, et une fonction de blocage des roulettes 6 et 7 dans des positions stables de sortie D et d'escamotage E.

Les cames 21 et 22 sont des cames à angle à sommet arrondi ou tronqué. Les cames 21, 22 sont espacées l'une de l'autre et disposés en opposition de sommets pour définir entre elle deux espaces libres angulaires opposés par leurs sommets 35, 36 (figures 2, 3, 4, 5) destinés à recevoir le tronçon rectiligne 19 du fond du U de l'axe commun 14 en U des roulettes 6 et 7 et à délimiter la course de déplacement de l'axe commun 14 et par conséquent celle des roulettes 6 et 7.

La came à angle 21 comprend deux faces planes 23, 24 formant un angle dont le sommet 25 est arrondi tandis que la came à angle 22 est pourvue de deux faces planes 26, 27 formant un angle dont le sommet 28 est tronqué et arrondi. Dans un déplacement angulaire ou pivotement du levier à cames 13 autour de son axe 12 (figure 3), de sa position représentée en traits discontinus correspondant à la position de sortie des roulettes 6 et 7 (figure 2) à sa position représentée en trait plein (figure 3) correspondant à la position d'escamotage des roulettes 6 et 7, les faces 26, 27 de la came 22 successivement poussent le tronçon rectiligne 19 de l'axe commun 14 des roulettes 6, 7, et l'axe commun 14, sous l'effet complémentaire du poids du lave-linge 1, glisse sur les rampes inclinées 8 et 9 et occupe en fin de course la position représentée en trait plein (figure 3) qui correspond à la position d'escamotage des roulettes 6 et 7 où le lave-linge 1 repose sur ses pieds fixes 30 (figure 1). Lors d'un déplacement angulaire ou pivotement en sens inverse du levier à came 13, les faces 23, 24 de la came 21 successivement poussent le tronçon rectiligne 19 de l'axe commun 14 des roulettes 6 et 7, font glisser l'axe commun 14 sur les rampes inclinées 8 et 9 et soulever le lave-linge 1 par les roulettes et amènent cet axe commun 14 de sa position représenté en trait plein (figure 3) correspondant à la position d'escamotage des roulettes 6 et 7, à sa position illustrée en traits discontinus (figure 3) correspondant à la position de sortie des roulettes 6 et 7. Les faces 23, 24 de la came à angle 21 et les faces 26, 27 de la came à angle 22 contribuent ainsi à faire accomplir par le levier sa fonction d'entraînement des roulettes 6 et 7 de leur position de sortie à leur position d'escamotage et vice-versa. Dans leur déplacement, les roulettes 6 et 7 sont guidées par les voies de déplacement constituées par les bords longitudinaux rectilignes et parallèles des alvéoles 4 et 5. Leur axe commun 14 qui les accompagne, affecte un mouvement de translation et, reste parallèle à lui-même dans ses différentes positions. A la fin d'une course de pivotement du levier à cames 13, de sa position en traits discontinus à sa position en trait plein (figure 3), la face 27 de la came 22 et la face 23 de la came 21 continuent à s'appuyer sur le tronçon rectiligne 19 de l'axe commun 14 et applique sur cet axe 14 un couple de torsion qui tend à le faire tourner autour de l'axe de pivotement 12 du levier 13. Cependant les bords longitudinaux rectilignes parallèles des alvéoles 4 et 5 qui guident le déplacement des roulettes 6 et 7, les maintiennent en position et s'opposent à cette tendance de rotation de l'axe commun 14. Toute progression complémentaire de l'axe commun 14 et par conséquent des roulettes 6, 7 est alors interdite. Il en résulte que les faces 27 et 23 des cames 22 et 21 et par conséquent les cames 21 et 22 contribuant à faire accomplir au levier 13 sa fonction de blocage des roulettes 6, 7 dans une position stable d'escamotage.

Selon une autre caractéristique, pour immobiliser le levier à cames 13 dans cette position de fin de course de pivotement représentée en trait plein dans la figure 3 afin d'éviter des vibrations libres de ce levier, génératrices de bruits désagréables durant le fonctionnement du lave-linge 1, un ergot de blocage 31 est formé sur le trajet de l'une des cames, la came 22 dans l'exemple illustré pour immobiliser par friction cette came 22 par conséquent le levier 13.

D'une façon analogue, à la fin de la course de pivotement du levier à cames 13 de sa position en trait plein (figure 3) à sa position en traits discontinus (figure 3) correspond à sa position représentée à la figure 2, la face 24 de la came 21 et la face 26 de la came 22 continuent à s'appuyer sur le tronçon rectiligne 19 de l'axe commun 14 et appliquent sur cet axe 14 en même temps que l'effet du poids du lave-linge, les roulettes 6 et 7 étant en position de sortie, un couple de torsion qui tend à le faire tourner autour de l'axe de pivotement 12 du levier 13. Cependant, les bords longitudinaux des alvéoles 4 et 5 qui guident et maintiennent en position les roulettes 6 et 7, s'opposent à cette tendance de rotation de l'axe commun 14. Toute progression complémentaire de l'axe 14 et par conséquent des roulettes 6, 7 est alors interdite. Il en résulte que les faces 24 et 26 des cames 21 et 22 et par conséquent les cames 21 et 22 contribuent à faire accomplir au levier 13 sa fonction de blocage des roulettes 6, 7 dans une position stable de sortie.

Dans l'exemple illustré (figure 2), à la fin de la course de mise des roulettes 6, 7 en position de sortie, la poignée 20 du levier 13 se trouve appliquée contre la partie frontale du socle 3 et accomplit également dans ce cas une fonction de butée de blocage pour renforcer les cames 21 et 22 dans l'accomplissement par le levier 13 de sa fonction de blocage.

Dans un pivotement du levier 13, les cames 21 et 22 entraînent l'axe commun 14 et constituent tour à tour des butées à cet axe, pour imposer des limites prédéterminées de déplacement à cet axe 14 vers l'avant et vers l'arrière du socle, représentées en 14D et 14E dans l'exemple illustré (figures 3 et 7) et l'empêcher de sortir des guides de coulissement 15 et 16 dans ses positions 14A et 14C.

Selon une autre caractéristique, le levier 13 maintient prisonnier l'axe commun 14 des roulettes dans ses cames 21 et 22 par des talons de longueurs prédéterminées qui prolongent perpendiculairement les faces de ces cames en des points choisis et à une distance du bras du levier 13 sensiblement égale à la hauteur des rampes de glissement 8 et 9 de manière à fermer l'entrée des espaces libres angulaires opposés par leurs sommets 35, 36 définis par des cames et talons tout en laissant un unique accès ajusté au tronçon rectiligne 19 du fond du U de l'axe commun 14 des roulettes 6, 7 dans ces espaces 35, 36 quand ce levier 13 se trouve dans une position prédéterminée (figures 4 et 5), et un libre déplacement de cet axe 14 dans ces espaces 35, 36 de sa position correspondant à la position d'escamotage des roulettes 6, 7 (figure 3) à sa position correspondant à la position de sortie des roulettes 6, 7 (figure 2). Dans l'exemple illustré, la came 21 comprend dans ses faces 23 et 24 respectivement des talons perpendiculaires 32 et 33 tandis que la came 22 est pourvue d'un seul talon perpendiculaire 34 dans sa face 27. Les talons 32, 33, 34 ferment l'entrée des espaces 35, 36 définis par les cames 21 et 22 et ces talons tout en laissant à l'axe commun 14 un accès 37 dans les espaces 35, 36 quand le levier 13 occupe une position sensiblement perpendiculaire au tronçon rectiligne 19 de cet axe 14, illustrée dans la figure 4.

Dans l'assemblage du socle 3 à roulettes escamotables, les roulettes 6 et 7 sont respectivement disposées dans les alvéoles frontales 4 et arrière 5 et la partie de leur axe commun 14 en U formant le fond du U de cet axe est introduite ou insérée dans les guides de coulissement 15 à travers leurs extrémités ouvertes 38 (figures 2 et 7) et poussée jusqu'au fond de ces guides de manière que les extrémités libres des branches du U de cet axe 14 puissent être introduites ou insérées dans les guides de coulissement 16 à travers leurs extrémités ouvertes 39. L'axe commun 14 et les roulettes 6 et 7 sont alors maintenus coulissants dans le socle 3 par les guides de coulissement 15 et 16.

Le levier 13 disposé sensiblement perpendiculairement au tronçon rectiligne 19 de l'axe commun 14 des roulettes 6 et 7 (figure 4) est simultanément monté sur son axe de pivotement 12 et sur ce tronçon rectiligne 19 de l'axe 14 par engagement plus ou moins dur de ce tronçon dans l'accès 37 laissé par les talons 32, 33, 34 des cames 21, 22. Après l'entrée de son tronçon rectiligne 19 dans les espaces angulaires 35, 36, l'axe commun 14 des roulettes 6 et 7 est prisonnier des cames 21 et 22 du levier 13. Le levier 13 empêche alors l'axe 14 de sortir des guides de coulissement 15 et 16 et réciproquement, cet axe 14 empêche le levier 13 de se dégager de son tronçon rectiligne 19 et par conséquent également de son axe de pivotement 12, car dans le cas où le levier 13 se trouve dans sa position dite position de montage ou démontage représentée à la figure 4, il faut forcer ce levier 15 pour le sortir de l'axe 14 à travers l'accès 37. En outre, quand le levier 13 est dans sa position dite de montage ou démontage (figure 4) l'axe commun 14 des roulettes se trouve justement sur les rampes inclinées 8 et 9, et sous l'action du poids du lave linge, est automatiquement poussé contre la came à angle 21 et de ce fait retenu prisonnier du levier 13 par les talons 32, 33 de cette came 21. Il en résulte que l'axe commun 14 ne peut pas, par lui-même se dégager du levier 13 autrement dit il ne peut l'être que par une opération volontaire de démontage. L'assemblage de l'ensemble "jeu de roulettes 6 et 7, levier à cames 13 et socle 3" décrit ci-dessus se fait ainsi par montage par simple insertion et par maintien de cet ensemble dans leur cohésion mécanique de fonctionnement par simple interconnexion mécanique des éléments constituants de cet ensemble excluant tous systèmes mécaniques d'assemblage, de fixation ou de liaison connus par vis, goupilles, clips ou agrafes, etc.

Dans l'exemple illustré, le socle proprement dit 13, le levier à cames 13 et les roulettes 6, 7 sont économiquement réalisés par moulage d'un matériau à bonne résistance mécanique, tel qu'une matière synthétique, un métal, renforcé ou non par une armature métallique tandis que l'axe commun 14 des roulettes 6 et 7 est constitué avantageusement par une tige métallique rigide mise en forme par cambrage ou pliage.

Le socle à roulettes escamotables 3, ci-dessus qui est facilement et rapidement fabriqué et assemblé économiquement constitue un bâti ou une pièce principale d'un bâti est prêt à recevoir et à supporter les autres organes constituants de l'appareil en construction, qui est un lave-linge 1 dans l'exemple illustré.

## Revendications

1. Socle à roulettes escamotables comprenant dans sa face inférieure un jeu de roulettes mobiles (6, 7) longitudinalement déplaçable, et un levier (13) accomplissant des fonctions d'entraînement, de blocage et de butées de ce jeu de roulettes, caractérisé en ce qu'il comprend dans sa face inférieure, d'une part, un jeu de roulettes mobiles (6, 7) monté sur un axe commun (14) et un levier à cames (13), et d'autre part, des alvéoles (4, 5) et des ailettes de retenue (10, 11) formant entre eux des logements et voies de déplacement pour les roulettes (6, 7), et des guides de coulissement, de mise en place et de dégagement pour l'axe commun (14), qui contribuent à permettre un assemblage de l'ensemble "jeu de roulettes (6, 7), axe commun (14), levier à cames (13) et socle (3)", par montage par insertion, et par maintien de cet ensemble dans leur cohésion mécanique de fonctionnement par interconnexion mécanique des éléments constituants.

2. Socle selon la revendication 1, caractérisé en ce que les alvéoles (4, 5) pour roulettes (6, 7) sont parallèles et leurs bords longitudinaux sont rectilignes, parallèles et pourvus d'arêtes en partie inclinée servant de rampes de glissement (8, 9) pour l'axe commun (14) des roulettes (6, 7).

3. Socle selon la revendication 1, caractérisé en ce qu'il comprend dans le fond des alvéoles (4, 5) des languettes élastiques (17, 18) exerçant une pression contre les roulettes (6, 7) en position d'escamotage.

4. Socle selon la revendication 1, caractérisé en ce qu'il comprend dans sa face inférieure, un jeu de roulettes (6, 7) pourvu d'un axe commun filiforme (14) ayant une forme générale d'un U.

5. Socle selon la revendication 1, caractérisé en ce qu'il comprend un levier (13) pourvu de deux cames (21, 22) à faces planes (23, 24–26, 27) formant des angles à sommet arrondi ou tronqué, espacées l'une de l'autre et disposées en opposition de sommets de manière à définir deux espaces libres angulaires opposés par leurs sommets (35, 36) destinés à recevoir un tronçon (19) de l'axe commun (14) des roulettes.

6. Socle selon la revendication 5, caractérisé en ce que dans le levier (13), les cames (21, 22) sont pourvues de talons perpendiculaires (32, 33, 34) qui prolongent les faces des cames en des points choisis et à une distance du bras du levier (13) sensiblement égale à la hauteur des rampes de glissement (8, 9) et ferment l'entrée des espaces (35, 36) des l'axe commun (14) des roulettes, tout en laissant un unique accès (37) ajusté à cet axe commun (14).

7. Socle selon l'une des revendications 5 et 6, caractérisé en ce qu'il comprend dans sa face inférieure, sur le trajet de l'une (22) des cames (21, 22) du levier (13), un ergot de blocage (31) qui immobilise cette came (22) par friction quand le levier (13) est en fin de course de mise en position d'escamotage des roulettes (6, 7).

8. Socle selon l'une des revendications 1 à 7, caractérisé en ce que le levier à cames (13) comprend à son extrémité libre, une poignée (20) qui sert également de butée de blocage du levier (13) en fin de course de mise en position de sortie des roulettes (6, 7).

9. Socle selon l'une des revendications 1 à 8, caractérisé en ce qu'il comprend d'une part un socle proprement dit (3), un levier à cames (13) et des roulettes (6, 7) constitués par un matériau mécaniquement résistant, et réalisés par moulage, et un axe commun (14) des roulettes constitué par une tige métallique rigide cambrée ou pliée.

10. Appareil tel qu'un lave-linge, caractérisé en ce qu'il comprend comme bâti ou pièce principale de bâti un socle (3) selon l'une des revendications 1 à 9 sur lequel sont montés les autres organes constituants de l'appareil.

**Claims**

1. A supporting base with retractable castors, comprising in its lower face a set of movable castors (6, 7) displaceable in the longitudinal direction, and a lever (13) intended for pulling, blocking and abutting the set of castors, characterized in that it comprises in its lower face on the one hand a set of movable castors (6, 7) mounted on a common axis (14) and a cam lever (13), and on the other hand cells (4, 5) and retaining ribs (10, 11) arranged to form in between them housings and paths of displacements for the castors (6, 7), and guides provided for sliding, positioning and releasing the common axis (14), which guides contribute to the realization of a unit consisting of the set of castors (6, 7), the common axis (4), the cam lever (13) and the base (3), to be assembled by way of insertion, and to be kept in its operational mechanical cohesion due to the mechanical interconnection of its constituting elements.

2. A supporting base according to claim 1, characterized in that the cells (4, 5) for the castors (6, 7) are disposed in parallel, and their longitudinal borders are straightlined, parallel and provided with set-offs, which are partially inclined to serve as slide ramps (8, 9) for the common axis (14) of the castors (6, 7).

3. A supporting base according to claim 1, characterized in that it comprises flexible tongues (17, 18) at the bottom of the cells (4, 5) adapted to press against the castors (6, 7) when in the retracted position.

4. A supporting base according to claim 1, characterized in that it comprises in its lower face a set of castors (6, 7) provided with a common wire-shaped axis (14) and the general shape of a U.

5. A supporting base according to claim 1, characterized in that it comprises a lever (13) provided with two cams (21, 22) having plane faces (23, 24–26, 27) which form mutually distanced angles having a rounded or truncated peak, with the plates being oppositely located so as to define two open angular spaces facing each other by their peaks (35, 36) and intended to receive a portion (19) of the common axis (14) of the castors.

6. A supporting base according to claim 5, characterized in that the cams (21, 22) of the lever (13) are provided with perpendicular heels (32, 33, 34) arranged to extend the faces of the cams at selected points and at a distance to the arm of the lever (13), which is substantially equal to the height of the slide ramps (8, 9), and arranged to close the entrance of the reception spaces (35, 36) of the common axis (14) of the castors, while leaving open a single entrance (37), adjusted to the common axis (14).

7. A supporting base according to claims 5 and 6, characterized in that it comprises a stopper nose (31) in its lower face within the trajectory of one (22) of the cams (21, 22) of the lever (13), which nose is adapted to immobilize said cam (22) by way of friction, when the lever (13) is at the end of travel of putting the castors (6, 7) in their retracted position.

8. A supporting base according to any one of the claims 1 to 7, characterized in that the cam lever (13) comprises a handle (20) disposed at its free end, which also serves the purpose of a stopper abutment for the lever (13) at the end of travel of putting the castors (6, 7) in their non-retracted position.

9. A supporting base according to any one of claims 1 to 8, characterized in that it comprises on the one hand a base properly speaking (3), a cam lever (13) and castors (6, 7) constituted of mechanically resistant material, realized by moulding, and on the other hand a common axis (14) for the castors constituted of a folded or bent rigid metal shaft.

10. An apparatus such as a washing machine, characterized in that it comprises a chassis or principal base structure part (3) according to any one of claims 1 to 9, on which the other constituting elements of the apparatus are mounted.

**Patentansprüche**

1. Untersatz mit versenkbaren Laufrollen, der einen Satz beweglicher, in Längsrichtung verstellbarer Laufrollen (6, 7) an seiner Unterseite sowie einen Hebel (13) aufweist, der die Funktionen des Fortziehens, Blockierens und Anschlagens des Laufrollensatzes ausübt, dadurch gekennzeichnet, daß der Untersatz an seiner Unterseite einerseits einen auf einer gemeinsamen Achse (14) angebrachten Satz beweglicher Laufrollen (6, 7) und einen Nockenhebel (13) aufweist, und andererseits Zellen (4, 5) und Halterippen (10, 11), die miteinander Aufnahmeräume und Bewegungsbahnen für die Laufrollen (6, 7) bilden, sowie Gleitführungen zum Instellungbringen und zum Freigeben der gemeinsamen Achse (14) aufweist, die zum Zusammenbau der aus Laufrollensatz (6, 7), gemeinsamer Achse (14), Nockenhebel (13) und Untersatz (3) bestehenden Gesamtheit durch Einschubmontage und Erhaltung der Gesamtheit in ihrem mechanischen Funktionszusammenhang durch mechanische Verbindung der sie bildenden Elemente beiträgt.

2. Untersatz nach Anspruch 1, dadurch gekennzeichnet, daß die Zellen (4, 5) für Laufrollen (6, 7) parallel zueinander angeordnet und ihre Längsränder geradlinig, parallel und mit Kanten ausgestattet sind, die teilweise geneigt sind und als Gleitrampen (8, 9) für die gemeinsame Achse (14) der Rollen (6, 7) dienen.

3. Untersatz nach Anspruch 1, dadurch gekennzeichnet, daß er im Boden der Zellen (4, 5) elastische Zungen (17, 18) aufweist, die auf die Laufrollen (6, 7) in der Versenkungsstellung einen Anpreßdruck ausüben.

4. Untersatz nach Anspruch 1, dadurch gekennzeichnet, daß er an seiner Unterseite einen Satz Laufrollen (6, 7) mit einer gemeinsamen, drahtförmigen Achse (14) von allgemein U-förmigem Profil aufweist.

5. Untersatz nach Anspruch 1, dadurch gekennzeichnet, daß er einen Hebel (13) mit zwei Nocken (21, 22) mit ebenen Stirnseiten (23, 24–26, 27) aufweist, welche Winkel mit abgerundetem oder abgestumpftem Scheitel bilden und voneinander entfernt sind, sowie in Oppositionslage der Scheitel angeordnet sind, derart, daß zwei freie, mit ihren Scheiteln (35, 36) gegeneinandergerichtete Winkelräume definiert werden, die zur Aufnahme eines Abschnitts (19) der gemeinsamen Achse (14) der Laufrollen bestimmt sind.

6. Untersatz nach Anspruch 5, dadurch gekennzeichnet, daß im Hebel (13) die Nocken (21, 22) mit senkrechten Absätzen (32, 33, 34) versehen sind, die die Stirnflächen der Nocken an ausgewählten Punkten und in einem solchen Abstand vom Arm des Hebels (13) verlängern, der im wesentlichen der Höhe der Gleitrampen (8, 9) entspricht, und die den Eingang der Aufnahmeräume (35, 36) für die gemeinsame Achse (14) der Laufrollen verschließen, dabei jedoch einen einzelnen Zugang (37) belassen, der auf die gemeinsame Achse (14) abgestimmt ist.

7. Untersatz nach einem der Ansprüche 5 und 6, dadurch gekennzeichnet, daß er an seiner Unterseite in der Bahn einer (22) der Nocken (21, 22) des Hebels (13) eine Sperrnase (31) aufweist, die diese Nocke (21) durch Reibung blockiert, wenn sich der Hebel am Ende der Bewegungsbahn zur Überführung der Laufrollen (6, 7) in die Versenkstellung befindet.

8. Untersatz nach einem der Ansprüche 1 bis 7, dadurch gekennzeichnet, daß der Nockenhebel (13) an seinem freien Ende einen Handgriff (20) besitzt, der zugleich als Blockieranschlag für den Hebel (13) am Ende seiner Bewegungsbahn zur Überführung in die Stellung ausgefahrener Laufrollen (6, 7) befindet.

9. Untersatz nach einem der Ansprüche 1 bis 8, dadurch gekennzeichnet, daß er einerseits einen Unterbau (3) im eigentlichen Sinne, einen Nockenhebel (13) und Laufrollen (6, 7) aus einem mechanisch widerstandsfähigen Material, die durch Gießen erzeugt sind, und andererseits eine gemeinsame Achse (14) für die Laufrollen aufweist, die aus einer umgebogenen oder gefalteten starren Metallstange besteht.

10. Gerät wie etwa eine Waschmaschine, dadurch gekennzeichnet, daß es als Gestell oder Hauptbestandteil des Gestells einen Untersatz (3) gemäß einem der Ansprüche 1 bis 9 aufweist, an dem die anderen wesentlichen Bauteile des Geräts befestigt sind.

FIG_1

FIG_7

FIG_6

FIG_5

# FIG_2

# FIG_4

# FIG_3